# EUROPÄISCHE PATENTSCHRIFT

(11) **EP 1 290 363 B1**
(45) Veröffentlichungstag und Bekanntmachung des Hinweises auf die Patenterteilung: **04.08.2004**
(21) Anmeldenummer: 01940180.1
(22) Anmeldetag: 20.04.2001
(51) Int. Cl.: F16J 15/08

(54) **DICHTUNGSANORDNUNG**
SEAL ARRAY
DISPOSITIF D'ETANCHEIFICATION

(30) Priorität: 20.04.2000 DE 10019567
(43) Veröffentlichungstag der Anmeldung: 12.03.2003
(73) Patentinhaber: Busak + Shamban Deutschland GmbH, 70565 Stuttgart (DE)
(72) Erfinder: KECK, Matthias, 71272 Renningen (DE)
(74) Vertreter: KOHLER SCHMID + PARTNER
(86) Internationale Anmeldenummer: PCT/DE2001/001515
(87) Internationale Veröffentlichungsnummer: WO 2001/084022

(56) Entgegenhaltungen:
- DE-A- 4 408 246
- DE-A- 19 503 285
- US-A- 4 813 608
- US-A- 5 129 658
- US-A- 5 433 370
- US-A- 5 799 954

## Beschreibung

Die Erfindung betrifft eine Dichtungsanordnung wie sie beispielsweise aus der DE-17-4 408 246 bekannt ist, mit einem statisch abzudichtenden Gehäusespalt zwischen zwei Bauteilen bei einem insbesondere pulsierenden Hochdruck über 1000 bar. Diese Dichtung findet Verwendung bei Hochdruckreinigern, Einspritzsystemen, Common Rail Injektoren, Wasserstrahlschneidern, so dass die Dichtung durch einen Systemdruck eines Fluids druckbeaufschlagt wird.

### Stand der Technik

Beispielsweise bei Hochdruckdieseleinspritzsystemen (Common Rail Injektoren) werden an unterschiedlichen Abdichtstellen statische Dichtungen benötigt, die hohen Kraftstoffsystemdrücken (derzeit 1300 bis 1600 bar, Entwicklungstendenz bis zu 2000 bar) widerstehen müssen.

Die bisher eingesetzten Dichtungen aus hochgefülltem PTFE erreichen bei ca. 1600 bar ihre Grenzen. Bei höheren Drücken tritt Spaltextrusion auf. Dichtringe aus Kunststoffen mit höherem Extrusionswiderstand als gefülltes PFTE erfordern eine hohe Fertigungsgenauigkeit der Dichtringe und/oder der umgebenden Bauteile und/oder eine hohe Oberflächengüte. Dadurch ergeben sich Nachteile hinsichtlich der Kosten und Prozeßsicherheit.

### Aufgabe der Erfindung

Aufgabe der Erfindung ist es, eine einfach aufgebaute wirksamere Hochdruck-Abdichtung bei Common Rail Injektoren oder ähnlichen Systemen zu schaffen.

### Gegenstand und Vorteile der Erfindung

Diese Aufgabe wird erfindungsgemäß durch eine Dichtungsanordnung gemäß Patentanspruch 1 gelöst. Die harte Komponente legt sich an den Gehäusespalt an, verschließt ihn und verhindert Extrusion einer Dichtungskomponente in den Gehäusespalt. Die weichere Komponente wird bei vorhandenem Systemdruck stark deformiert und dichtet den Gehäusespalt ab. Dieses Zusammenwirken zweier Komponenten führt zu hoher Prozess-Sicherheit.

Bei einer Ausführungsform ist die erste Dichtungskomponente zwischen dem Rand und einem vorstehenden Absatz verspannt. Dies führt zu einer Halterung der ersten Dichtungskomponente an der zweiten Dichtungskomponente und erleichtert den Einbau und die Montage. Alternativ zu dieser Schnappverbindung ist eine chemische Verbindung beispielsweise durch Verkleben der Komponenten denkbar.

Der Rand einer anderen Ausführungsform ist gewölbt ausgebildet. Der gewölbte Rand kann sich an die abzudichte Fläche des Bauteils verstärkt anpressen und verformen und so zu einer sicheren Abdichtung führen.

Bevorzugt ist die erste Dichtungskomponente L-förmig oder aus zwei einen Winkel einschließenden Schenkeln ausgebildet. Hierdurch wird ein einfach aufgebauter wirkungsvoller Stützring geschaffen. Im Sinne einfacher Montage und hoher Prozessicherheit ist es zweckmäßig, beide Dichtungskomponenten fest miteinander zu verbinden.

Die erste Dichtungskomponente kann aus einem Kunststoff oder einem Metall und die zweite Dichtungskomponente kann aus einem elastomeren Werkstoff hergestellt sein.

### Zeichnung

Zwei Ausführungsbeispiele der erfindungsgemäßen Dichtungsanordnung sind in der schematischen Zeichnung dargestellt und werden in der nachfolgenden Beschreibung erläutert. Es zeigen:
- **Fig. 1a**: eine aus zwei Dichtungskomponenten bestehende Dichtung vor der Montage im Querschnitt;
- **Fig. 1b**: eine Dichtungsanordnung mit eingebauter Dichtung nach Fig. 1a im Querschnitt;
- **Fig. 1c**: die Dichtungsanordnung nach Fig. 1b bei anliegendem Systemdruck;
- **Fig. 2a**: eine andere aus zwei Dichtungskomponenten bestehende Dichtung vor der Montage im Querschnitt;
- **Fig. 2c**: eine Dichtungsanordnung mit eingebauter Dichtung nach Fig. 2a im Querschnitt bei anliegendem Systemdruck.

### Beschreibung der Ausführungsbeispiele

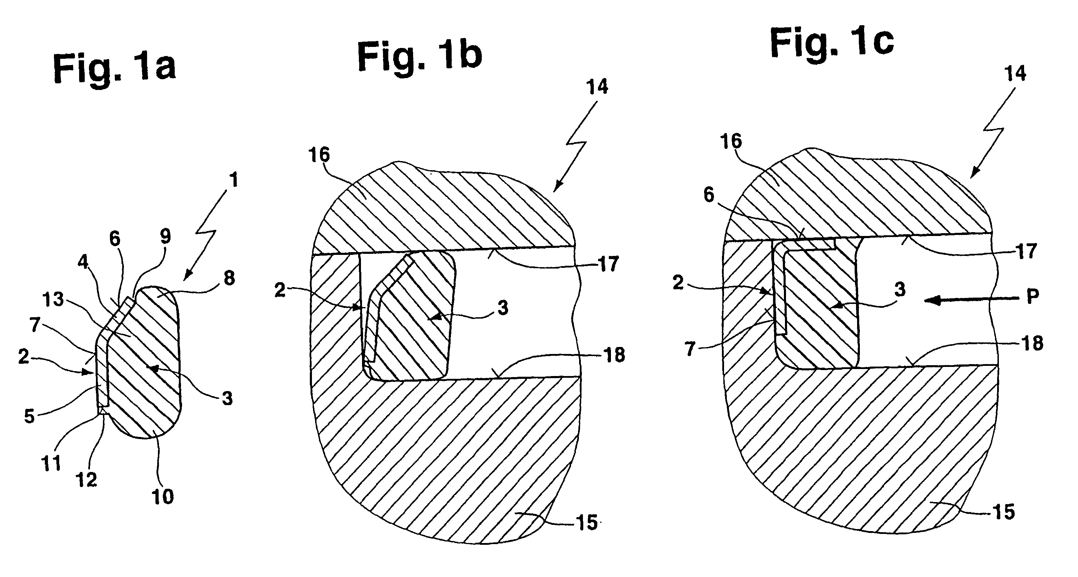

Aus der **Fig. 1a** (Herstellungszustand) ist ersichtlich, dass eine Dichtung 1 aus zwei miteinander verbundenen ringförmigen Dichtungskomponenten 2 und 3 zusammengesetzt ist. Die erste Dichtungskomponte 2 ist aus einem harten, extrusionsfesten Material, beispielsweise aus einem biegefähigen Metall oder Metallblech, hergestellt, während die zweite Dichtungskomponente 3 aus einem weichen, extrusions- oder stärker anpassungsfähigen Material besteht. In der Fig. 1a ist der unbelastete Zustand vor der Montage der Dichtung 1 dargestellt, so dass die Dichtungskomponenten 2 und 3 im Fertigungszustand gezeigt sind. Die erste Dichtungskomponente 2 weist eine L-Form mit zwei Schenkeln 4 und 5 auf, die eine der Dichtfläche eines Bauteils (siehe Fig. 1b) zugewandte Anlagefläche 6 und eine Kontaktfläche 7 ausbilden. An die eine Seite dieser L-Form schließt sich formschlüssig ein Teil der zweiten Dichtungskomponente 3 an. Ein gewölbter Rand 8 der zweiten Dichtungskomponente 3 steht über ein Schenkelende 9 und die Kontaktfläche 7 vor. Ein anderer gewölbter Rand 10 steht ebenfalls über ein anderes Schenkelende 11 vor, weil die zweite Dichtungskomponente 3 eine größere Längserstreckung aufweist als die erste Dichtungskomponente 2. Diese erste Dichtungskomponente 2 liegt über das Schenkelende 11 auf einem Absatz 12 der zweiten Dichtungskomponente 3 und mit dem Schenkel 4 auf einer Schulter 13 der zweiten Dichtungskomponente 3 an.

**Fig. 1b** zeigt den montierten Zustand der ein geringes Übermaß aufweisenden Dichtung ohne Druckbelastung bei einer Dichtungsanordnung 14. Während sich bei der Dichtungskomponente 2 lediglich eine geringe Veränderung einstellt, verformt sich die Dichtungskomponente 3 wesentlich stärker, so dass eine Fixierung der Dichtung in dem Hohlraum erzielt wird. Die Dichtung 1 wird in den Hohlraum gedrückt und liegt an den Seitenwänden 17, 18 des Hohlraums an, der durch die Bauteile 15 und 16 gebildet wird. Die Fixierung kann durch einen geringen Vordruck oder Montagedruck erfolgen, der geringer ist als der Systemdruck durch ein Fluid. An Stelle eines hydraulischen Montagedrucks ist auch ein mechanischer Vordruck denkbar, beispielsweise durch einen Stempel.

Nach dem Einbau und unter Druckbelastung (Betriebszustand) nehmen die Dichtungskomponenten 2 und 3 die Form gemäß Fig. 1c an. Eine Dichtungsanordnung 14 weist ein profiliertes Bauteil 15 und Bauteil 16 auf, so dass sich ein abzudichtender Gehäusespalt zwischen dem Bauteil 15 und dem Bauteil 16 ergibt. Die erste Dichtungskomponente 2 verformt sich zwar. Eine Extrusion in den Gehäusespalt findet aber nicht statt. Die Dichtungskomponente 2 verschließt den Gehäusespalt und liegt an der weicheren zweiten Dichtungskomponente 3 an, welche die eigentliche Dichtfunktion übernimmt. Der Winkel zwischen den Schenkel kann durch den Systemdruck verändert werden. Die erste Dichtungskomponente 2 verhindert Extrusion am Gehäusespalt. Die Dichtung 1 ist so gestaltet, dass die härtere Dichtungskomponente 2 den Gehäusespalt bei vorhandenem Systemdruck eines Fluids (z.B. Kraftstoff eines Injektors oder ein Hydrauliköl) verschließt und die Extrusion der weichen Dichtungskomponente 3 auch bei sich verändernder Gehäusespaltbreite ("atmender Spalt") verhindert. Die erste Dichtungskomponente 2 liegt dabei mit dem Schenkel 5 an dem Bauteil 15 und mit dem Schenkel 4 an dem Bauteil 16 an. Die Anlage über die Anlagefläche 6 wird durch die Montageverpressung der Komponente 3 bewirkt und durch den vorhandenen Systemdruck verstärkt. Ein toleranzbedingter ggf. vorhandener Abstand zwischen der Dichtungskomponente 2 und dem Bauteil 15 wird mit der ersten Druckbeaufschlagung durch einen Hochdruck P geschlossen. Die zweite Dichtungskomponente 3 gibt den Systemdruck an die erste Dichtungskomponente 2 weiter und verformt sich derart, dass der Abstand geschlossen bleibt und auch eine Anlage der zweiten Dichtungskomponente 2 über die Anlagefläche 6 an dem Bauteil 16 stets gewährleistet ist. Das Dichtungselement 3 wird deformiert, verpresst, in den Freiraum zwischen der Dichtfläche 17 und der Bauteilfläche 18 gedrückt und füllt den Freiraum zwischen der Dichtfläche 17 und der Bauteilfläche 18 aus. Durch einen insbesondere pulsierenden Systemdruck P stellt sich eine betriebsgerechte Fixierung der Dichtung ein. Durch das Fluid wird eine hydraulische Kalibrierung oder Formung (Hydroforming) der Dichtung, vor allem der elastischen Dichtungskomponente 3, erreicht.

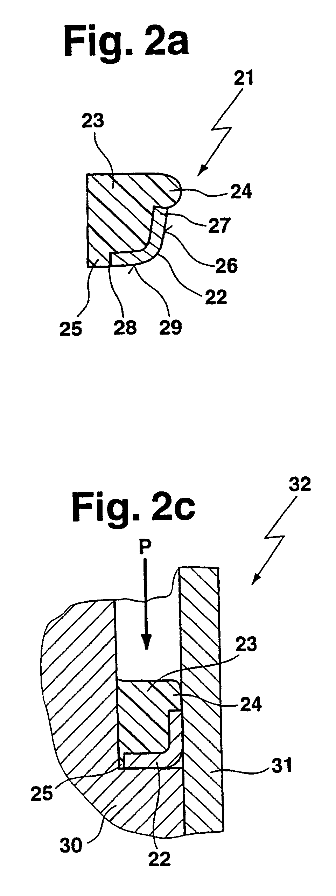

Eine unbelastete Dichtung 21 gemäß Fig. 2a ist aus der ersten ringförmigen Dichtungskomponente 22 und der zweiten ringförmigen Dichtungskomponente 23 aufgebaut. Die zweite Dichtungskomponente 23 ist im wesentlichen rechteckig mit einem gewölbten Rand oder Vorsprung 24 und einem Absatz 25 ausgebildet, so dass die erste L-förmige Dichtungskomponente 22 teilsweise umschlossen und eingefasst wird. Der Rand 24 steht über eine Anlagefläche 26 vor. Schenkelenden 27 und 28 fügen sich an den Absatz 25 und den Rand 24 an, wobei eine flächenhafte Anlage oder flächenhafter Kontakt zwischen den beiden Dichtungskomponenten 22 und 23 gegeben ist. Eine Kontaktfläche 29 der ersten Dichtungskomponente 22 ist zur Anlage an einem profilierten Bauteil vorgesehen.

**Fig. 2c** veranschaulicht wieder die Verformung der ersten Dichtungskomponente und den Materialfluss der zweiten Dichtungskomponente 23, wenn die statische Dichtung 21 zwischen zwei Bauteilen 30 und 31 zur Abdichtung eines Gehäusespalts eingesetzt und einem in axialer Richtung wirkendem Hochdruck P ausgesetzt wird. Diese Dichtungsanordnung 32 tritt beispielsweise bei Common Rail Injektoren auf. Insbesondere der Rand 24 wird in einer Weise deformiert, dass eine variierende Gehäusespaltbreite zwischen den Bauteilen 30 und 31 kompensiert und stets abgedichtet wird. Die zweite weiche Dichtungskomponente 23 übernimmt wiederum die eigentliche Dichtungsfunktion, während die harte Dichtungskomponente 22 Extrusion am Gehäusespalt verhindert.

### BEZUGSZEICHENLISTE

- 1: Dichtung
- 2: Erste Dichtungskomponente
- 3: Zweite Dichtungskomponente
- 4: Schenkel
- 5: Schenkel
- 6: Anlagefläche
- 7: Kontaktfläche
- 8: Gewölbter Rand
- 9: Schenkelende
- 10: Gewölbter Rand
- 11: Schenkelende
- 12: Absatz
- 13: Schulter
- 14: Dichtungsanordnung
- 15: Bauteil
- 16: Bauteil
- 17: Dichtfläche
- 18: Bauteilfläche
- 21: Dichtung
- 22: Erste Dichtungskomponente
- 23: Zweite Dichtungskomponente
- 24: Gewölbter Rand
- 25: Absatz
- 26: Anlagefläche
- 27: Schenkelende
- 28: Schenkelende
- 29: Kontaktfläche
- 30: Bauteil
- 31: Bauteil
- 32: Dichtungsanordnung
- P: Hochdruck

## Patentansprüche

1. Dichtungsanordnung (14; 32) mit einem abzudichtenden Gehäusespalt zwischen zwei Bauteilen (15, 16; 30, 31) und mit einer Dichtung (1; 21), bestehend aus zwei miteinander verbundenen Dichtungskomponenten (2, 3; 22, 23), einer ersten extrusionsfesten verformbaren Dichtungskomponente (2; 22), die eine einer Dichtfläche (17) des einen Bauteils (16; 31) zugewandte Anlagefläche (6; 26) und eine Kontaktfläche (7; 29) zur Anlage an dem anderen Bauteil (15; 30) aufweist, und einer zweiten stärker deformierbaren Dichtungskomponente (3; 23), an der die erste Dichtungskomponente (2; 22) anliegt und die einen über die Anlagefläche (6; 26) vorstehenden Rand (8; 24) aufweist, wobei die erste Dichtungskomponente (2; 22) zum Verschließen des Gehäusespalts durch den Systemdruck an die Dichtflächen (17, 18) der Bauteile (15, 16; 30, 31) andrückbar ist, und die zweite Dichtungskomponente (3; 23) an die Dichtflächen (17, 18) abdichtend andrückbar ist.

2. Dichtungsanordnung nach Anspruch 1, **dadurch gekennzeichnet, dass** die erste Dichtungskomponente (2; 22) zwischen dem Rand (8; 24) und einem vorstehenden Absatz (12; 25) verspannt ist.

3. Dichtungsanordnung nach Anspruch 1 oder 2, **dadurch gekennzeichnet, dass** der Rand (8; 24) gewölbt ausgebildet ist.

4. Dichtungsanordnung nach einem oder mehreren der vorhergehenden Ansprüche, **dadurch gekennzeichnet, dass** die erste Dichtungskomponente (2; 22), im Querschnitt gesehen, L-förmig oder aus zwei einen Winkel einschließenden Schenkeln (4, 5) ausgebildet ist.

5. Dichtungsanordnung nach einem oder mehreren der vorhergehenden Ansprüche, **dadurch gekennzeichnet, dass** die erste Dichtungskomponente (2; 22) aus einem Kunststoff oder einem Metall und die zweite Dichtungskomponente (3; 23) aus einem elastomeren Werkstoff hergestellt ist.

## Claims

1. Sealing arrangement (14;32) for sealing a housing gap between two components (15, 16; 30, 31), having a seal (1; 21) which consists of two interconnected sealing components (2, 3; 22, 23), a first extrusion-resistant deformable sealing component (2; 22) which has an abutment surface (6; 26) facing a sealing surface (17) of the one component (16; 31) and a contact surface (7; 29) for abutment on the other component (15; 30) and with a second sealing component (3; 23) which can be more deformed, on which the first sealing component (2; 22) abuts and which has an edge (8; 24) projecting past the abutment surface (6; 26), wherein the first sealing component (2; 22) can be sealingly pressed onto the sealing surfaces (17, 18) of the components (15, 16; 30, 31) through system pressure to close the housing gap and the second sealing component (3; 23) can be sealingly pressed onto the sealing surfaces (17, 18).

2. Sealing arrangement according to claim 1, **characterized in that** the first sealing component (2; 22) is tensioned between the edge (8;24) and a projecting step (12;25).

3. Sealing arrangement according to claim 1 or 2, **characterized in that** the edge (8;24) is curved.

4. Sealing arrangement according to one or more of the preceding claims, **characterized in that** the first sealing component (2; 22) is L-shaped, viewed in cross-section, or is formed from two legs (4, 5) subtending an angle.

5. Sealing arrangement according to one or more of the preceding claims, **characterized in that** the first sealing component (2; 22) is made from plastic material or metal and the second sealing component (3; 23) is made from an elastomeric material.

## Revendications

1. Agencement d'étanchéité (14 ; 32) englobant un interstice de carter, à rendre étanche, entre deux pièces (15, 16 ; 30, 31), et un joint d'étanchéité (1 ; 21) constitué de deux composants de joint d'étanchéité (2, 3 ; 22, 23) reliés l'un à l'autre, à savoir un premier composant de joint d'étanchéité (2 ; 22) déformable et résistant à l'extrusion, qui présente une surface d'appui (6 ; 26) dirigée vers une surface d'étanchéité (17) de l'une des pièces (16 ; 31) et une surface de contact (7 ; 29) destinée à venir en appui sur l'autre pièce (15 ; 30), ainsi qu'un second composant de joint d'étanchéité (3 ; 23) plus fortement déformable et sur lequel s'appuie le premier composant de joint d'étanchéité (2 ; 22) et qui présente un bord (8 ; 24) faisant saillie au-delà de la surface d'appui (6 ; 26), le premier composant de joint d'étanchéité (2 ; 22) pouvant être pressé par la pression du système, sur les surfaces d'étanchéité (17, 18) des pièces (15, 16 ; 30, 31), pour fermer l'interstice de carter, et le second composant de joint d'étanchéité (3 ; 23) pouvant être pressé sur les surfaces d'étanchéité (17, 18) en y produisant l'étanchéité.

2. Agencement d'étanchéité selon la revendication 1, **caractérisé en ce que** le premier composant de joint d'étanchéité (2 ; 22) est enserré entre le bord (8 ; 24) et un gradin (12 ; 25) en saillie.

3. Agencement d'étanchéité selon la revendication 1 ou 2, **caractérisé en ce que** le bord (8 ; 24) est d'une configuration bombée.

4. Agencement d'étanchéité selon l'une ou plusieurs des revendications précédentes, **caractérisé en ce que** le premier composant de joint d'étanchéité (2 ; 22), vu en section transversale, est réalisé en forme de L ou avec deux ailes ou branches (4, 5) formant un angle l'une avec l'autre.

5. Agencement d'étanchéité selon l'une ou plusieurs des revendications précédentes, **caractérisé en ce que** le premier composant de joint d'étanchéité (2 ; 22) est fabriqué en une matière plastique ou en un métal, et le second composant de joint d'étanchéité (3 ; 23) en un matériau du type élastomère.
